# EUROPÄISCHE PATENTSCHRIFT

(11) **EP 2 505 521 B1**
(45) Veröffentlichungstag und Bekanntmachung des Hinweises auf die Patenterteilung: **07.01.2015**
(21) Anmeldenummer: 12160905.1
(22) Anmeldetag: 23.03.2012
(51) Int. Cl.: B65G 11/12, B65G 11/18, B65G 69/18

(54) **Fördereinrichtung für pulverförmiges und/oder granuliertes Gut sowie Gemische dieses Gutes mit Flüssigkeiten**
Transport device for powdery and/or granulated material as well as mixtures of this material with liquids
Dispositif de transport pour matériau pulvérulent et/ou granulaire ainsi que des mélanges de ce matériau avec des liquides

(30) Priorität: 30.03.2011 EP 11160515
(43) Veröffentlichungstag der Anmeldung: 03.10.2012
(73) Patentinhaber: Bayer Intellectual Property GmbH, 40789 Monheim (DE)
(72) Erfinder: Ungerechts, Herbert, 47647 Kerken (DE); Frank, Hans-Jörg, 47918 Tönisvorst (DE); Hagedorn, Markus, 45481 Mülheim an der Ruhr (DE)
(74) Vertreter: BIP Patents

(56) Entgegenhaltungen:
- EP-A1- 1 475 348
- EP-A1- 2 070 850
- DE-U1-202005 016 035
- US-A- 4 125 195
- US-A- 5 881 780

## Beschreibung

Die Erfindung betrifft eine Fördereinrichtung für ein Gemisch aus rieselfähigen feinteiligen Feststoffen, insbesondere für pulverförmiges und/oder granulatartiges (Misch-)gut, insbesondere Kunststoffgranulat mit einer Flüssigkeit. Insbesondere ist der Gegenstand der Erfindung ein senkrecht angeordnetes und flexibel montierbares Teleskop-Rohr zur Förderung von einem Gemisch aus vorzugsweise Polymer-Granulaten mit einer Flüssigkeit z.B. zum Spülen einer kontaminierten Fördereinrichtung.

Das bei der Herstellung thermoplastischer Kunststoffen im Reaktor anfallende grießförmige Produkt wird in einem Extruder plastifiziert und zu Einzelsträngen ausgeformt, die mittels eines im Granulierwerkzeug rotierenden Messers zu Granulaten geschnitten werden. Dieses Produkt kann in einem weiteren Schritt durch Compoundierung mit weiteren Komponenten versehen werden.

Als Compoundieren bezeichnet man in der Polymeraufbereitung die Herstellung der fertigen Kunststoff-Formmasse, dem Compound, aus den Kunststoffrohstoffen unter Zugabe von Füll- und Verstärkungsstoffen, Weichmachern, Haftvermittlern, Gleitmitteln, Stabilisatoren etc.. Die Compoundierung erfolgt überwiegend in Extrudern und umfasst die Verfahrensoperationen Fördern, Aufschmelzen, Dispergieren, Mischen, Entgasen und Druckaufbau.

Bei der Granulierung wird die Schmelze dann durch die Öffnungen einer Düsenplatte gepresst, so dass anschließend im Falle einer Stranggranulierung zunächst Schmelzestränge erzeugt werden, die dann bei der Granulierung Zylindergranulat ergeben oder aber im Falle einer Kopfgranulierung direkt am Austritt an der Düsenplatte geschnitten werden und dann Linsen- oder Kugelgranulat ergeben. Die Granulierung kann beispielsweise in einem Flüssigkeitsstrom erfolgen, der die Granulate kühlt und ein Agglomerieren weitgehend vermeidet. Anschließend wird das Granulat getrocknet und gesiebt.

Im Anschluss zur Granulierung nach der Herstellung oder nach der Compoundierung wird in der Regel das Produkt pneumatisch zu einem Silo oder Bunker gefördert. Anschließend wird den Silos oder Bunker das Schüttgut entnommen und in Container oder Silofahrzeuge gefüllt, oder es erfolgt eine Absackung des Schüttgutes in Big Bags, Oktabins oder Säcke. Bei jedem dieser Schritte können Stäube/Beläge z.B. durch Abrieb entstehen, die zusätzlich zum Schüttgut selbst dann bei einem Schüttgutwechsel eine Kontamination verursachen können.

Typische Schüttgüter sind z.B., Baustoffe, wie Oberboden, Sand, Kies, Schotter, Zement, andere mineralische Güter, wie Erz, Streusalz, und Lebensmittel, wie Getreide, Zucker, Speisesalz, Kaffee, Mehl, sowie pulverförmige Güter wie Pigmente, Füllstoffe, Granulate, Pellets usw.

Gleichzeitig wird die Forderung nach Flexibilität immer höher, so dass in einer Abfüllanlage Geräte je nach Bedarf austauschbar sind. Beispielsweise kann bei einem Schüttgut der Bedarf nach einem Sichter (Entstaubungseinheit) bestehen, um feine Partikel zu entfernen, wobei für andere Schüttgüter nur ein Förderrohr notwendig ist. Zudem sind die Investitionskosten nicht unerheblich, so dass eine flexible Lösung zum Einsatz beispielsweise eines Förderrohres an verschiedenen Orten einer Anlage ermöglicht wird.

DE 195 272 40 C1 beschreibt eine Fördereinrichtung, wobei ein Abschnitt der Förderleitung zwischen zwei starr zueinander beabstandeten Widerlagern auswechselbar angeordnet ist und der auswechselbare Förderleitungsabschnitt unter Wirkung einer Spannfeder teleskopierbar ausgebildet ist und sich die Enden der Teleskopanordnung an den Widerlagern abstützen. Nachteilig ist der konstruktionsbedingte entsprechende Aufwand für die Reinigung zur Vermeidung von Kontamination sobald ein anderer Feststoff befördert wird, insbesondere im Rohr-Flanschbereich und im Rohr-Innenverlauf.

Die Forderung nach leichter Auswaschbarkeit von Puffer- und Fördereinrichtungen vor dem Befüllen bzw. Befördern eines anderen Schüttguttyps wird jedoch zunehmend häufiger gestellt.

Da der bisherige Stand der Technik keine hinreichende Lösung zu diesem Problem ermöglicht, war es Aufgabe der vorliegenden Erfindung, eine Fördereinrichtung bereitzustellen, das eine Verbindung zwischen verschiedenen Ebenen, die auf unterschiedlicher Höhe senkrecht übereinander angeordnet sind, ermöglicht, Dabei gilt es, ein Feststoff-Flüssigkeitsgemisch aus Reinigungsprozessen aus unterschiedlichen Bereichen einer Ebene in die darunterliegenden Ebenen weiterzuleiten. Diese Teleskop-Förderrohre sollten insbesondere an unterschiedlichen Positionen innerhalb eines zu spülendes Abfüllgebäudes einsetzbar sein, und zu diesem Zweck austauschbar und leicht aber dennoch sicher montierbar sein.

Die Aufgabe der vorliegenden Erfindung ist es daher, die Nachteile des Standes der Technik zu beheben.

Die gestellte Aufgabe wurde durch Bereitstellen einer Fördervorrichtung gelöst, die ein teleskopierbares Förderrohr beinhaltet und die folgenden Merkmale aufweist:
a) Anordnung des Teleskoprohres (5a) auf einem mobilen Rahmen zum Transport des Rohres an unterschiedliche Reinigungsstellen auf der Bühne, wobei der mobile Rahmen Hub-/Senkeinrichtung zur Positionierung des Rohres an unterschiedlichen Andockvorrichtungen auf einer Bühne enthält
b) Trichter (4) am Teleskoprohreingang mit Andockkragen zum Aufsetzen auf die Deckenzentrierung (2)
c) Deckenzentrierung (2) mit Initiator (3) zur automatisierten Erkennung einer Trichterandockung
d) Spülschlauch (5b) mit Hub-Senkvorrichtung
e) eine Hebe-Verfahrvornchtung (7, 8) zur sicheren Entnahme des Bodendeckels

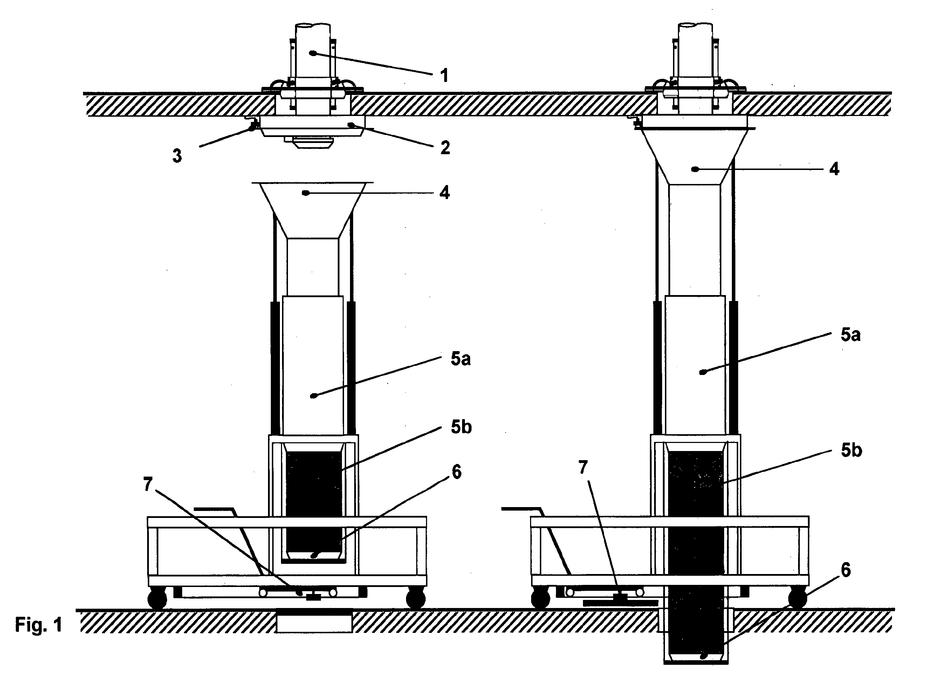

Die Merkmale des erfindungsgemäßen Teleskop-Förderrohres werden in den Figuren 1. bis 3. veranschaulicht, ohne sie dadurch auf den Inhalt dieser Figuren einzuschränken.
**Fig. 1****.** zeigt ein Teleskop-Förderrohr im eingefahrenden - und im angedockten Zustand
**Fig. 2****.** zeigt eine Bodendeckel Hebe- und Verfahrvorrichtung mit den einzelnen Arbeitsschritten
**Fig. 3****.** zeigt den Einsatz eines Teleskop-Förderrohrs am Beispiel einer Silo-Spülung

Das Teleskop-Förderrohr ist kein starres Rohr, sondern besteht aus zwei oder mehreren Rohrsegmenten - die nicht zwangsläufig eine zylindrische Form aufweisen müssen, sondern auch einen vieleckigen Querschnitt aufweisen können - die zusammengesetzt sind und sich in einander verschieben lassen (siehe Fig. 1). Auf diese Weise entsteht ein Förderrohr, dessen Länge sich durch teleskopartiges Ineinanderschieben oder Auseinanderziehen der miteinander in Verbindung stehenden Rohrsegmente variieren lässt.

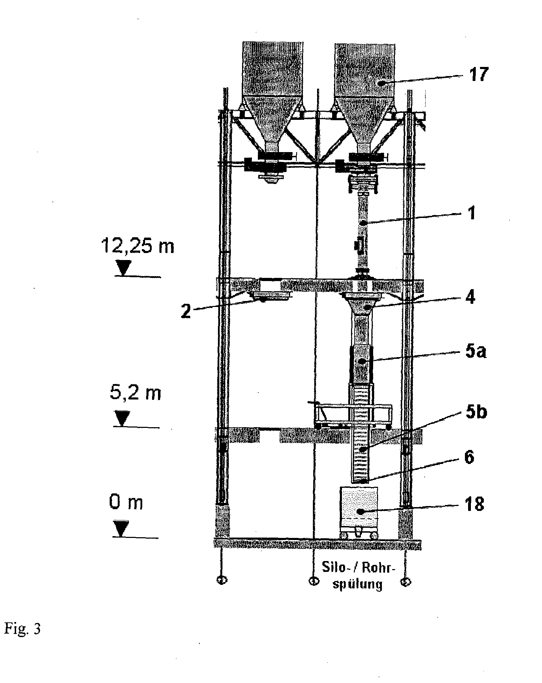

Ein möglicher Arbeitsvorgang, der durch das erfindungsgemäße Teleskop-Förderrohr (Fig. 1) wirkungsvoll unterstützt wird, wird nachfolgend am Beispiel der Silo-Spülung erläutert (siehe auch Fig. 3).

Hier wird beispielsweise ein entleertes aber zuvor Granulat-führendes Silo (17) mit einem starren Feststoff-Förderrohr (1) verbunden und dessen Rohr-Auslaufflansch in ein Teleskop-Förderrohr (5a, 5b) endet. Dessen Rohr-Auslaufflansch (6) reicht bis in einem Auffangfilterwagen (18) für Spüllösungen. Über das Silo (17) kann nun der Spülprozess vorzugsweise mit reinem Wasser beginnen, das im untersten Filterwagen (18) als Spüllösung aufgefangen wird. Auf diese Weise lässt sich über eine Distanz von drei Gebäude-Bühnen hinweg eine stabile aber dennoch schnell und flexibel montierbare Rohrverbindung installieren, die den Dichtheits-Anforderungen genügt und das Spülwasser sicher und ohne Leckagen in einen Filterwagen auf der untersten Gebäudebühne ableitet.

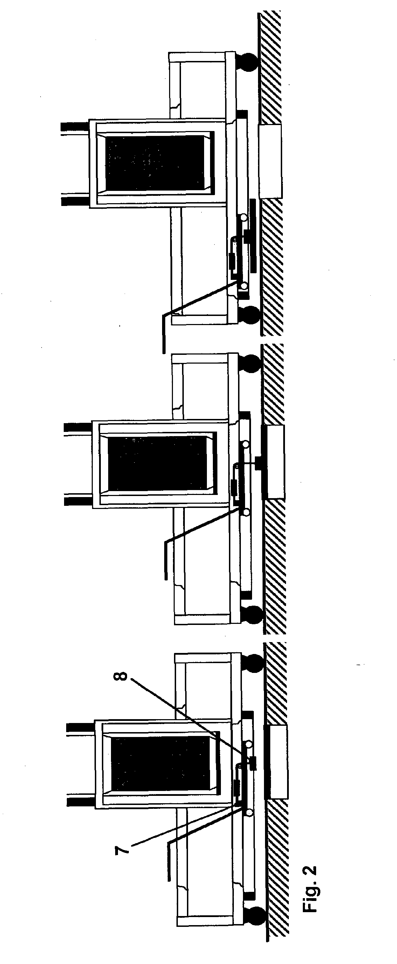

Das Teleskop-Förderrohr (5a, 5b) selbst wird manuell mit Hilfe einer Deckenzentrierung (2) positioniert. Dabei verfährt der angetriebene und von der unteren Bühne aus gesteuerte Trichter (4) dicht auf die Deckenzentrierung (2) auf, so dass für den Spülprozess die notwendige Dichtheit entsteht. Ein Initiator (3) an der Deckenzentrierung (2) erkennt eine korrekte Ankopplung des Spültrichters, wodurch erst dann eine Spülfreigabe erteilt wird. Ebenso verfährt der Spülschlauch (5b) mit dem Auslaufflansch (6) durch die Bodenöffnung bis in den Auffangfilterwagen (18). Der Bodendeckel wird zuvor mittels eines integrierten Verfahrwagens (7, Fig. 2) und einem Hub-Magneten (8) aus der Bodenöffnung gehoben und versetzt. Zur Sicherung vor Personenabstürzen ist das mobile Teleskop-Förderrohr (5a, 5b) gebremst und somit nicht verfahrbar. Die Bremse lässt sich erst wieder lösen, wenn der Initiator am Hub-Magnet (8) keinen Bodendeckel erkennt.

Diese Anordnung hat gegenüber den sonst üblicherweise verwendeten flexiblen Schläuchen enorme Vorteile hinsichtlich der Anforderungen an Arbeitssicherheit an Sauberkeit und an Flexibilität, wobei Flexibilität insbesondere die schnelle Montage bedeutet.

Der Spülschlauch (5b) ist bevorzugt faltbar und ausfahrbar. Dieser ist beispielsweise auch unter kompakter Schlauch oder Verladeschlauch bekannt.

Die Flansche oder Gegenflansche des erfindungsgemäßen Teleskop-Förderrohres können gegebenenfalls in einer bevorzugten Ausführungsform zusätzlich Sensoren enthalten, wie der beispielhaft in Fig. 1 gezeigte Initiator (3), die die Stellung des Flansches einer Andockvorrichtung durch eine sogenannte Initiator-Abfrage anzeigen und somit einen korrekten Andockvorgang automatisiert sicher erkennen lassen. Solche Initiatoren sind handelsübliche Geräte und werden beispielsweise unter der Bezeichnung NCB15-30GM40-N0-V1. von der Fa. Pepperl und Fuchs. vertrieben.

Im Kontext der vorliegenden Anmeldung werden die Begriffe Sensor und Initiator gleichbedeutend verwendet.

Das erfindungsgemäße Teleskop-Förderrohr ist aufgrund seiner Abmessungen und seines Eigengewichtes in der Regel nicht ohne weiteres manuell handhabbar, insbesondere nicht während den Andock-Manövern, die eine hohe Präzision erfordern. Um diese Handhabung zu erleichtern, wird das Teleskop-Förderrohr in einer bevorzugten Ausführungsform mit Hilfe eines mobilen Rahmens in die gewünschte Arbeitsposition gebracht, wie beispielhaft in **Fig. 1****.** schematisch dargestellt.

Das teleskopartige Förderrohr lässt sich mit Hilfe des oben beschriebenen mobilen Rahmens (Fig. 1) problemlos andocken und den Spülschlauch durch eine Bodenöffnung hindurch absenken, so dass auch Apparate und Einrichtungen über eine Distanz von mehr als einer Bühnenhöhe sicher mit einander verbunden werden können.

Die erfindungsgemäße Arbeitsplattform ist dazu geeignet, das Teleskop-Förderrohr von einem Ort zum Anderen zu bewegen. Da diese Arbeitsplattform verfahren werden kann, lässt sich auf diese Weise das Teleskop-Förderrohr sehr flexibel an unterschiedliche Abfüll-Position montieren. Die Hebe- und Senk-Vorrichtungen (insbesondere der mobile teleskopierbare Teil) können in einer bevorzugten Ausführungsform mechanisch, elektrisch beispielsweise durch pneumatische Antriebe unterstützt werden.

Optional kann der gesamte Rahmen vorzugsweise durch elektrische, gegebenenfalls ortsbewegliche Antriebe bewegt werden. Ortsbewegliche, d.h. eigenständig verfahrbare vom Transportgut entkoppelbare Antriebe haben den Vorteil, dass Sie für unterschiedliche Transportaufgaben eingesetzt werden können. Dieser sogenannte Kleinschlepper oder Mover läßt sich mit einem Hubwerk inkl. einem Adaptionsausleger an den Rahmen der Arbeitsplattform formschlüssig verbinden. Somit kann der Bediener über ein angetriebenes drehbares Bodenrad des Movers die Arbeitsplattform beschleunigen, abbremsen und lenken. Es können aber auch fest mir der Arbeitsplattform verbundene Antriebe verwendet werden.

Zur weiteren Arbeitssicherheit wird in einer weiteren bevorzugten Ausführungsform für das Öffnen des Bodendeckels (wenn vorhanden) zur Absicherung der Bodenöffnung eine separate Hebe-Verfahrvorrichtung (7) beispielsweise mit elektrischem Lastmagnet (8) eingesetzt. Die Initiatoren sind handelsübliche Geräte.

So ist bevorzugt eine Deckelhebe-Vorrichtung (7 und 8) mit dem mobilen Rahmen für das Teleskop-Förderrohr fest verbunden, mit deren Hilfe vorhandene Deckel in Bodenöffnungen von Gebäudebühnen angehoben und gegebenenfalls bei Seite gelegt werden können, damit der Spülschlauch durch die frei gewordene Bodenöffnung hindurch geführt werden kann. Die Deckelhebe-Vorrichtung (7 und 8) ist dabei so in dem mobilen Rahmen integriert, dass der Hebemechanismus direkt unter dem Schlauch-Auslaufflansch wirksam wird. Die Konstruktion und Funktionsweise einer solchen Deckelhebe-Vorrichtung wird durch die **Fig. 2****.** veranschaulicht.

Diese Deckelhebe-Vorrichtung (7 und 8) kann grundsätzlich auch als separate, gegebenenfalls mobile Vorrichtung verwendet werden.

## Patentansprüche

1. Fördervorrichtung, die ein teleskopierbares Förderrohr und wenigstens folgende Merkmale beinhaltet
a) Anordnung des Teleskoprohres (5a) auf einem mobilen Rahmen zum Transport des Rohres an unterschiedliche Reinigungsstellen auf der Bühne, wobei der mobile Rahmen Hub-/Senkeinrichtung zur Positionierung des Rohres an unterschiedlichen Andockvorrichtungen auf einer Bühne enthält
b) Trichter (4) am Teleskoprohreingang mit Andockkragen zum Aufsetzen auf Deckenzentrierung (2)
c) Deckenzentrierung (2) mit Initiator (3) zur automatisierten Erkennung einer Trichterandockung
d) Spülschlauch (5b) mit Hub-Senkvorrichtung
e) eine Hebe-Verfahrvorrichtung (7, 8) zur sicheren Entnahme des Bodendeckels

2. Fördervorrichtung gemäß Anspruch 1, **dadurch gekennzeichnet, dass** Sensoren an einem oder beiden Flanschen oder Gegenflanschen des Förderrohres angebracht sind.

3. Fördervorrichtung gemäß Anspruch 2, **dadurch gekennzeichnet, dass** der Sensor ein korrektes Andocken des Flansches erkennt und die Spülfreigabe übermittelt.

4. Fördervorrichtung gemäß einem der Ansprüche 1 bis 3, **dadurch gekennzeichnet, dass** das Rohr
auf einem mobilen Rahmen zum Transport des Rohres an unterschiedliche Abfüllstellen auf der Bühne angeordnet ist, wobei der mobile Rahmen Hebe- und Senk-Einrichtungen zur
Positionierung des Rohres an unterschiedlichen Andockvorrichtungen auf einer Bühne enthält.

5. Fördervorrichtung gemäß Anspruch 4 **dadurch gekennzeichnet, dass** Hebe-, Senk-Einrichtungen durch pneumatische Antriebe unterstützt werden.

6. Fördereinrichtung gemäß Anspruch 4 oder 5, **dadurch gekennzeichnet, dass** eine Hebe-Verfahrvorrichtung (8) zur sicheren Entnahme des Bodendeckels an dem mobilen Rahmen vorhanden ist.

7. Fördervorrichtung gemäß Anspruch 6, **dadurch gekennzeichnet, dass** bei einer Deckelentnahme der mobile Rahmen gebremst ist.

8. Fördervorrichtung gemäß Anspruch 6 oder 7, **dadurch gekennzeichnet, dass** die Bremse erst gelöst wird, wenn der Initiator am Hub-Magneten keinen Bodendeckel erkennt.

9. Fördervorrichtung gemäß einem der Ansprüche 1 bis 8., **dadurch gekennzeichnet, dass** Arbeitsplattform durch elektrische, gegebenenfalls ortsbewegliche Antriebe bewegt werden.

10. Fördervorrichtung gemäß einem der Ansprüche 1 bis 9, **dadurch gekennzeichnet, dass** durch die Deckenzentrierung (2) die Positionierung des Teleskop-Rohres erfolgt

11. Fördervorrichtung gemäß dem Anspruchs 10, **dadurch gekennzeichnet, dass** durch das Aufliegen des Trichters (4) auf die Deckenzentrierung (2) eine Abdichtung erfolgt.

12. Verwendung einer Fördereinrichtung gemäß einem der Ansprüche 1 bis 11 zur Förderung von Schüttgut oder Gemische von Schüttgut und Flüssigkeiten.

13. Verwendung einer Fördereinrichtung gemäß Anspruch 12 zur Förderung von Polycarbonat-Granulat oder Gemische von Polycarbonat-Granulat und Flüssigkeiten.

## Claims

1. Conveying device which includes a telescopic conveying pipe and at least the following features
a) arrangement of the telescopic pipe (5a) on a mobile frame for transporting the pipe to different cleaning points on a platform, the mobile frame comprising a lifting/lowering device for positioning the pipe at different docking devices on the platform
b) a funnel (4) at the inlet of the telescopic pipe, with a docking collar for mounting onto the ceiling centring means (2)
c) a ceiling centring means (2) with an initiator (3) for the automatic detection of a funnel docking
d) a flushing tube (5b) with a lifting/lowering device
e) a lifting/moving device (7, 8) for the reliable removal of the bottom cover.

2. Conveying device according to Claim 1, **characterized in that** sensors are attached to one or both flanges or mating flanges of the conveying pipe.

3. Conveying device according to Claim 2, **characterized in that** the sensor detects correct docking of the flange and transmits the go-ahead to allow flushing.

4. Conveying device according to one of Claims 1 to 3, **characterized in that** the pipe is arranged on a mobile frame for transporting the pipe to different filling points on a platform, the mobile frame including lifting and lowering devices for positioning the pipe at different docking devices on the platform.

5. Conveying device according to Claim 4, **characterized in that** lifting and lowering devices are assisted by pneumatic drives.

6. Conveying device according to Claim 4 or 5, **characterized in that** there is a lifting/moving device (8) for the reliable removal of the bottom cover on the mobile frame.

7. Conveying device according to Claim 6, **characterized in that**, when a cover is being removed, the mobile frame is braked.

8. Conveying device according to Claim 6 or 7, **characterized in that** the brake is only released when the initiator at the lifting magnet does not detect a bottom cover.

9. Conveying device according to one of Claims 1 to 8, **characterized in that** the working platform is moved by electrical drives, possibly locationally movable drives.

10. Conveying device according to one of Claims 1 to 9, **characterized in that** the positioning of the telescopic pipe is performed by the ceiling centring means (2).

11. Conveying device according to Claim 10, **characterized in that** the placing of the funnel (4) onto the ceiling centring means (2) has the effect that a sealing takes place.

12. Use of a conveying device according to one of Claims 1 to 11 for conveying bulk material or mixtures of bulk material and liquids.

13. Use of a conveying device according to Claim 12 for conveying polycarbonate granules or mixtures of polycarbonate granules and liquids.

## Revendications

1. Dispositif de transport présentant un tube de transport télescopique et au moins les caractéristiques suivantes :
a) disposition du tube télescopique (5a) sur un cadre mobile pour le transport du tube en différents points de nettoyage sur la plate-forme, le cadre mobile présentant un dispositif de levage et d'abaissement pour positionner le tube au niveau de différents dispositifs d'arrimage sur une plate-forme,
b) une trémie (4) à l'entrée du tube télescopique avec des collets d'arrimage destinés à être placés sur un élément de centrage au plafond (2),
c) un élément de centrage au plafond (2) avec un initiateur (3) pour reconnaître de manière automatisée un arrimage de la trémie,
d) un tuyau de rinçage (5b) avec un dispositif de levage et d'abaissement,
e) un dispositif de levage et de déplacement (7, 8) pour enlever de manière sûre le couvercle de fond.

2. Dispositif de transport selon la revendication 1, **caractérisé en ce que** des capteurs sont montés au niveau d'une ou des deux brides ou brides conjuguées du tube de transport.

3. Dispositif de transport selon la revendication 2, **caractérisé en ce que** le capteur reconnaît l'arrimage correct de la bride et communique le déblocage du rinçage.

4. Dispositif de transport selon l'une quelconque des revendications 1 à 3, **caractérisé en ce que** le tube est disposé sur un cadre mobile en vue du transport du tube à différents points de remplissage sur la plate-forme, le cadre mobile présentant des dispositifs de levage et d'abaissement pour positionner le tube au niveau de différents dispositifs d'arrimage sur une plate-forme.

5. Dispositif de transport selon la revendication 4, **caractérisé en ce que** les dispositifs de levage et d'abaissement sont assistés par des entraînements pneumatiques.

6. Dispositif de transport selon la revendication 4 ou 5, **caractérisé en ce qu'**un dispositif de levage et de déplacement (8) est prévu pour enlever de manière sûre le couvercle de fond au niveau du cadre mobile.

7. Dispositif de transport selon la revendication 6, **caractérisé en ce que** le cadre mobile est freiné lors d'un enlèvement du couvercle.

8. Dispositif de transport selon la revendication 6 ou 7, **caractérisé en ce que** le frein est seulement relâché lorsque l'initiateur ne reconnaît aucun couvercle de fond au niveau d'aimants de levage.

9. Dispositif de transport selon l'une quelconque des revendications 1 à 8, **caractérisé en ce que** la plate-forme de travail est déplacée par des entraînements électriques, éventuellement mobiles.

10. Dispositif de transport selon l'une quelconque des revendications 1 à 9, **caractérisé en ce que** le positionnement du tube télescopique s'effectue par l'élément de centrage au plafond (2).

11. Dispositif de transport selon la revendication 10, **caractérisé en ce qu'**une étanchéité est obtenue par l'application de la trémie (4) sur l'élément de centrage au plafond (2).

12. Utilisation d'un dispositif de transport selon l'une quelconque des revendications 1 à 11 pour le transport de produits en vrac ou de mélanges de produits en vrac et de liquides.

13. Utilisation d'un dispositif de transport selon la revendication 12 pour le transport de granulés de polycarbonate ou de mélanges de granulés de polycarbonate et de liquides.
